# EUROPEAN PATENT APPLICATION

(11) **EP 1 947 396 A1**
(43) Date of publication of application: **23.07.2008**
(21) Application number: 06811104.6
(22) Date of filing: 03.10.2006
(51) Int. Cl.: F24D 17/02, F24D 3/18, F24H 1/00, F24H 1/18

(54) **HOT WATER SUPPLY SYSTEM**

(30) Priority: 03.10.2005 JP 2005290152
(71) Applicant: DAIKIN INDUSTRIES, LTD., Osaka-shi, Osaka 530-8323 (JP)
(72) Inventor: TAIRA, Shigeharu, Kusatsu-shi Shiga 525-8526 (JP)
(74) Representative: HOFFMANN EITLE
(86) International application number: PCT/JP2006/319756
(87) International publication number: WO 2007/040215

(57) **Abstract**

It is an object of the present invention to provide a hot water supply system whose economical burden is as small as possible on residents of a condominium multi-dwelling housing complex. A hot water supply system (1) is disposed with plural heat source units (10a), first fluid pipes (24a, 25a), second radiators (71a), a second fluid pipe (72) and a first liquid fluid storage container (80). Each of the heat source units includes a refrigerant circuit (20a). Each of the refrigerant circuits is formed by sequentially connecting a compressor (11a), a first radiator (15a), a pressure reducing mechanism (14a) and an evaporator (13a). The second radiators are connected in parallel with respect to the first radiators to discharge sides of the compressors. A liquid fluid that exchanges heat in the second radiators with refrigerant supplied from the compressors flows through the second fluid pipe. The first liquid fluid storage container is connected to the second fluid pipe. Additionally, the liquid fluid is stored in this first liquid fluid storage container.

## Description

### TECHNICAL FIELD

The present invention relates to a hot water supply system that utilizes heat pump type hot water supply machines.

### BACKGROUND ART

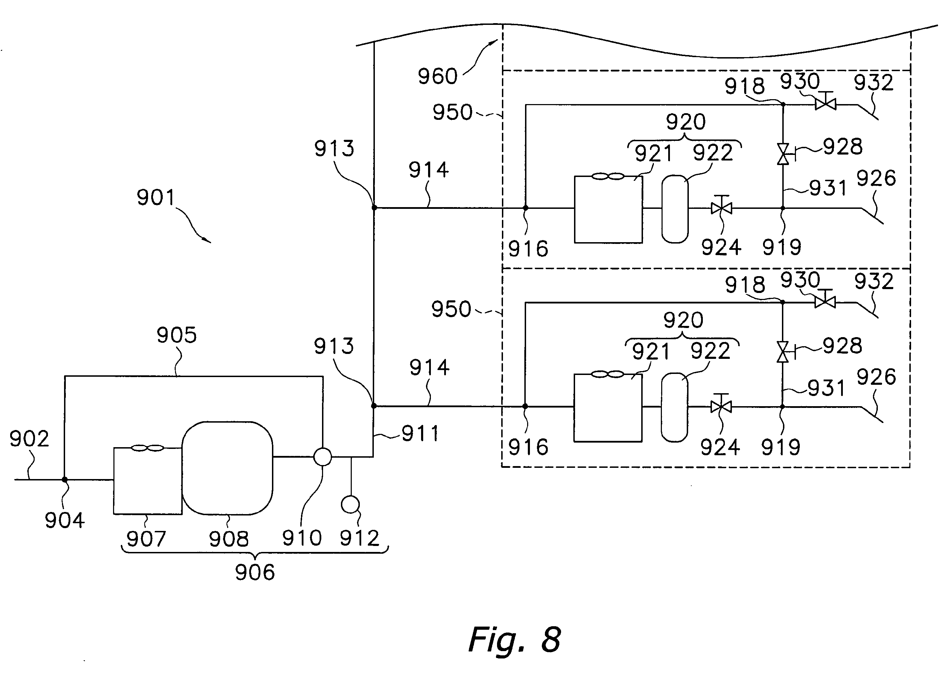

In the past, a hot water supply system 901 for a multi-dwelling housing complex such as shown in FIG. 8 has been proposed.

This hot water supply system 901 is, as shown in FIG. 8, mainly configured by a central hot water supply machine 906, individual hot water supply machines 920 and water supply pipes 902, 911 and 914, and the like.

The central hot water supply machine 906 is, as shown in FIG. 8, mainly configured by a central hot water supply heat pump 907, a central hot water storage tank 908, a three-way valve 910 and a temperature sensor 912. Here, the central hot water supply heat pump 907 is for heating tap water supplied through the upstream-most water supply pipe 902 to generate warm water. The central hot water storage tank 908 is for storing the warm water generated by the central hot water supply heat pump 907. The three-way valve 910 interconnects the central hot water storage tank 908, a branched pipe 905 that is branched at a first bifurcation point 904 from the upstream-most water supply pipe 902, and the constant temperature water supply pipe 911. The temperature sensor 912 is for measuring the temperature of the tap water or the warm water and is disposed downstream of the three-way valve 910.

The individual hot water supply machines 920 are hot water supply machines disposed in dwelling units 950 in a multi-dwelling housing complex 960 and, as shown in FIG. 8, are mainly configured by individual hot water supply heat pumps 921 and individual hot water storage tanks 922, respectively. Here, the individual hot water supply heat pumps 921 are for further heating the warm water supplied through the individual water supply pipes 914 extending to the dwelling units 950 from second bifurcation points 913 of the constant temperature water supply pipe 911 to generate higher-temperature warm water (hot water). The individual hot water storage tanks 922 are for storing the high-temperature warm water (hot water) generated by the individual hot water supply heat pumps 921.

Additionally, hot water supply taps 924 are disposed downstream of the individual hot water storage tanks 922, and hot water supply openings 926 are disposed downstream thereof. Further, the individual water supply pipes 914 are branched at third bifurcation points 916 upstream of the individual hot water supply heat pumps 921, water supply taps 930 are disposed downstream thereof, and water supply openings 932 are disposed downstream thereof. Further, fourth bifurcation points 918 upstream of the water supply openings 930 and fifth bifurcation points 919 downstream of the hot water supply taps 924 are bypass-connected by bypass pipes 931 disposed with mixing taps 928.

In this hot water supply system 1, the central hot water supply heat pump 907 heats the tap water supplied from the upstream-most water supply pipe 902 to generate warm water of 5 to 65°C. This warm water is stored in the central hot water storage tank 908 and appropriately delivered on demand. The delivered warm water merges in the three-way valve 910 with tap water supplied from the branched pipe 905. Then, the water temperature after merging is sensed by the temperature sensor 912, and the mixing ratio is adjusted by the three-way valve 910 such that the temperature becomes 20°C. Thereafter, this warm water passes through the constant temperature water supply pipe 911 and the individual water supply pipes 914 and is diverted at the third bifurcation points 916, with some of the warm water being supplied to the individual hot water supply heat pumps 921 and the remaining warm water being supplied to the water supply taps 930. The individual hot water supply heat pumps 921 heat the warm water supplied through the individual water supply pipes 914 to generate warm water (hot water) of 20 to 90°C. This warm water (hot water) is stored in the individual hot water storage tanks 922 and appropriately delivered by opening the hot water supply taps 924. The delivered warm water (hot water) is supplied from the hot water openings 926. It will be noted that before that, it is mixed as needed by the mixing taps 928 that are simultaneously opened with warm water (hot water) that has been guided to the fourth bifurcation points 918, and temperature adjustment is performed.

Additionally, when this hot water supply system 901 is installed in a multi-dwelling housing complex, residents of the dwelling units 950 can effectively utilize free space such as verandas.

<Patent Document 1> JP-A No. 2004-333038

### DISCLOSURE OF THE INVENTION

### <Problem that the Invention is to Solve>

However, when such a hot water supply system is introduced to a condominium multi-dwelling housing complex, the residents of the dwelling units must themselves bear maintenance fees of the individual hot water supply machines and the like, and it is sufficiently assumed that the residents must each month pay a repair reserve fund on top of the portion corresponding to the central hot water supply machine serving as a common utility. Consequently, there is the potential for the residents of condominium multi-dwelling housing complexes to which such a hot water supply system has been introduced to become economically strapped.

It is an object of the present invention to provide a hot water supply system whose economical burden is as small as possible on residents of a condominium multi-dwelling housing complex.

### <Means for Solving the Problem>

A hot water supply system pertaining to a first invention comprises a plurality of heat source units, first fluid pipes, second radiators, a second fluid pipe and a first liquid fluid storage container. Each of the heat source units includes a refrigerant circuit. It will be noted that the "radiators" mentioned here are condensers or gas coolers, for example. Each of the refrigerant circuits is formed by sequentially connecting a compressor, a first radiator, a pressure reducing mechanism and an evaporator. The first fluid pipes are disposed with respect to the first radiators. Additionally, a fluid that exchanges heat in the first radiators with refrigerant supplied from the compressors flows through these first fluid pipes. It will be noted that the phase "fluid" mentioned here is a phrase that includes liquid fluids, gas fluids and supercritical fluids. Further, heat exchange panels for floor heating, coil components of fan coil units, and hot water supply pipes for instantaneous water heating can be connected to these first fluid pipes. The second radiators are connected in parallel with respect to the first radiators to discharge sides of the compressors. A liquid fluid that exchanges heat in the second radiators with the refrigerant supplied from the compressors flows through the second fluid pipe. The first liquid fluid storage container is connected to the second fluid pipe. Additionally, the liquid fluid is stored in this first liquid fluid storage container.

In this hot water supply system, the plural heat source units include the refrigerant circuits that are formed by sequentially connecting the compressors, the first radiators, the pressure reducing mechanisms and the evaporators. Further, the first fluid pipes are disposed with respect to the first radiators. Additionally, the liquid that exchanges heat in the first radiators with the refrigerant supplied from the compressors flows through these first fluid pipes. Further, the second radiators are connected in parallel with respect to the first radiators to the discharge sides of the compressors. Additionally, the liquid fluid that exchanges heat in the second radiators with the refrigerant supplied from the compressors flows through this second fluid pipe. Moreover, the first liquid fluid storage container is connected to the second fluid pipe. Additionally, the liquid fluid is stored in this first liquid fluid storage container. For this reason, in this hot water supply system, when the heat source units are disposed in dwelling units of a multi-dwelling housing complex and the second radiators and the first liquid fluid storage container are installed on a roof or in an underground machine room of the multi-dwelling housing complex (when the liquid fluid storage container is installed in an underground machine room, a separate liquid fluid pump becomes necessary), not only are warm environments of the dwelling units supplied by just the heat source units installed in the dwelling units, but a shared hot water storage container can be held. In other words, in this hot water supply system, the heat source machine of the central hot water supply machine that had conventionally been installed becomes unnecessary. Consequently, in this hot water supply system, a repair reserve fund corresponding to the portion of the heat source machine and the like becomes unnecessary, and the economical burden on the residents of a condominium multi-dwelling housing complex becomes lighter.

A hot water supply system pertaining to a second invention is the hot water supply system pertaining to the first invention and further comprises a central control device. The central control device centrally controls the plurality of heat source units.

In this hot water supply system, the central control device is disposed. For this reason, in this hot water supply system, it becomes possible to efficiently operate the plurality of heat source units as the situation demands and to store hot water in the first liquid fluid storage container.

A hot water supply system pertaining to a third invention is the hot water supply system pertaining to the first invention or the second invention and further comprises flow rate control mechanisms. The flow rate control mechanisms control the flow rate of the refrigerant supplied from the compressors to the first radiators and the flow rate of the refrigerant supplied from the compressors to the second radiators. It will be noted that the "flow rate control mechanisms" mentioned here are valve mechanisms configured by electromagnetic valves whose openings are capable of being adjusted, for example. Further, the phrase "flow rate control" mentioned here is a phrase that includes an aspect where the refrigerant discharged from the compressors is supplied to just the first radiators or to just the second radiators.

In this hot water supply system, the flow rate control mechanisms are disposed. For this reason, in this hot water supply system, it becomes possible to distribute the refrigerant discharged from the compressors freely to the first radiators and the second radiators. Consequently, in this hot water supply system, it becomes possible to freely adjust the heat quantity of the refrigerant in the first radiators and the heat quantity of the refrigerant in the second radiators.

A hot water supply system pertaining to a fourth invention is the hot water supply system of any of the first invention to the third invention and further comprises heat exchangers. The heat exchangers are connected to the first fluid pipes. It will be noted that the "heat exchangers" mentioned here can be utilized for floor heating, air conditioning, or instantaneous water heating, for example.

In this hot water supply system, the heat exchangers are connected to the first fluid pipes. For this reason, in this hot water supply system, it becomes possible for the heat source units to provide not only the function of storing hot water in the shared first liquid fluid storage container in a multi-dwelling housing complex but also functions such as floor heating, air conditioning, and instantaneous water heating to each of the dwelling units.

A hot water supply system pertaining to a fifth invention is the hot water supply system of any of the first invention to the fourth invention, wherein the first liquid fluid storage container is one. It will be noted that the "first liquid fluid storage container" mentioned here may be a water supply tank installed in a multi-dwelling housing complex such as an apartment complex. In this case, ordinarily, inside the first liquid fluid storage container, temperature irregularities are present in the liquid fluid, with low-temperature liquid fluid being present in the lower portion of the first liquid fluid storage container and high-temperature liquid fluid being present in the upper portion of the first liquid fluid storage container. Consequently, by ensuring that the low-temperature liquid fluid is delivered from the lower portion and that the high-temperature liquid fluid is delivered from the upper portion, the first liquid fluid storage container can function as a hot water supply-cum-water supply source.

In this hot water supply system, the first liquid fluid storage container is one. For this reason, in this hot water supply system, it becomes possible to reduce costs corresponding to the container for storing the liquid fluid.

A hot water supply system pertaining to a sixth invention is the hot water supply system pertaining to the fifth invention, wherein one of the second fluid pipe is disposed with respect to a plurality of the second radiators.

In this hot water supply system, one of the second fluid pipe is disposed with respect to a plurality of the second radiators. For this reason, in this hot water supply system, it becomes possible to make the leading-out of the second fluid pipe simple.

A hot water supply system pertaining to a seventh invention is the hot water supply system pertaining to the fifth invention or the sixth invention and further comprises a plurality of liquid fluid delivery pipes. The liquid fluid delivery pipes extend from the first liquid fluid storage container.

In this hot water supply system, the plurality of liquid fluid delivery pipes are disposed. For this reason, in this hot water supply system, it becomes possible to distribute the high-temperature liquid fluid stored in the first liquid fluid storage container to each dwelling unit of a multi-dwelling housing complex.

A hot water supply system pertaining to an eighth invention is the hot water supply system pertaining to any of the first invention to the fourth invention, wherein a plurality of the first liquid fluid storage containers are disposed, and the first liquid fluid storage containers are interconnected by communicating pipes such that the first liquid fluid storage containers are capable of exchanging the liquid fluid.

In this hot water supply system, a plurality of the first liquid fluid storage containers are disposed. For this reason, in this hot water supply system, it becomes possible to store liquid fluid of different temperatures in each of the first liquid fluid storage containers, for example. Further, in this hot water supply system, even when the liquid fluid in one of the first liquid fluid storage containers is centrally used, the liquid fluid in another of the first liquid fluid storage containers can be immediately compensated.

A hot water supply system pertaining to a ninth invention is the hot water supply system pertaining to the eighth invention and further comprises a plurality of liquid fluid delivery pipes. The liquid fluid delivery pipes extend from the first liquid fluid storage containers.

In this hot water supply system, the plurality of liquid fluid delivery pipes are disposed with respect to the first liquid fluid storage containers. For this reason, in this hot water supply system, it becomes possible to immediately distribute the liquid fluid of various temperatures stored in the plurality of first liquid fluid storage containers to each dwelling unit of a multi-dwelling housing complex.

A hot water supply system pertaining to a tenth invention is the hot water supply system pertaining to the seventh invention or the ninth invention and further comprises second liquid fluid storage containers. The second liquid fluid storage containers are disposed in the vicinities of the heat source units. Additionally, the liquid fluid delivered from the first liquid fluid storage containers via the liquid fluid delivery pipes is stored in these second liquid fluid storage containers.

In this hot water supply system, the second liquid fluid storage containers are disposed. For this reason, in this hot water supply system, for example, it becomes possible to store a relatively low-temperature liquid fluid in the first liquid fluid storage containers, further heat that liquid fluid in the first radiators after that liquid fluid has been supplied to the second liquid fluid storage containers, and generate a high-temperature liquid fluid. Consequently, in this hot water supply system, it becomes possible to hold liquid fluid of a desired temperature in each dwelling unit.

A hot water supply system pertaining to an eleventh invention is the hot water supply system of any of the seventh invention, the ninth invention and the tenth invention and further comprises flow rate measuring means and temperature measuring means. The flow rate measuring means measure the flow rate of the liquid fluid flowing in the liquid fluid delivery pipes. The temperature measuring means measure the temperature of the liquid fluid flowing in the liquid fluid delivery pipes.

In this hot water supply system, the flow rate measuring means measure the flow rate of the liquid fluid flowing in the liquid fluid delivery pipes. Further, the temperature measuring means measure the temperature of the liquid fluid flowing in the liquid fluid delivery pipes. For this reason, in this hot water supply system, reasonable fee management can be performed in a multi-dwelling housing complex.

A hot water supply system pertaining to a twelfth invention is the hot water supply system pertaining to any of the first invention to the eleventh invention and further comprises energy measuring means. The energy measuring means measure the amount of consumed energy of the heat source units for supplying the refrigerant to the second radiators.

In this hot water supply system, the energy measuring means measure the amount of consumed energy of the compressor for supplying the refrigerant to the second radiators. For this reason, in this hot water supply system, the contribution percentage of each of the heat source units with respect to heating the liquid fluid stored in the first liquid fluid storage container can be determined. As a result, it becomes possible to perform distribution of electrical bills corresponding to the contribution percentage of each of the heat source units in a multi-dwelling housing complex.

### <Effects of the Invention>

In the hot water supply system pertaining to the first invention, when the heat source units are disposed in dwelling units of a multi-dwelling housing complex and the second radiators and the first liquid fluid storage container are installed on a roof or in an underground machine room of the multi-dwelling housing complex, not only are warm environments of the dwelling units supplied by just the heat source units installed in the dwelling units, but a shared hot water storage container can be held. In other words, in this hot water supply system, the heat source machine of the central hot water supply machine that had conventionally been installed becomes unnecessary. Consequently, in this hot water supply system, a repair reserve fund corresponding to the portion of the heat source machine and the like becomes unnecessary, and the economical burden on the residents of a condominium multi-dwelling housing complex becomes lighter.

In the hot water supply system pertaining to the second invention, it becomes possible to efficiently operate the plurality of heat source units as the situation demands and to store hot water in the first liquid fluid storage container.

In the hot water supply system pertaining to the third invention, it becomes possible to freely adjust the heat quantity of the refrigerant in the first radiators and the heat quantity of the refrigerant in the second radiators.

In the hot water supply system pertaining to the fourth invention, it becomes possible for the heat source units to provide not only the function of storing hot water in the shared first liquid fluid storage container in a multi-dwelling housing complex but also functions such as floor heating, air conditioning, and instantaneous water heating to each of the dwelling units.

In the hot water supply system pertaining to the fifth invention, it becomes possible to reduce costs corresponding to the container for storing the liquid fluid.

In the hot water supply system pertaining to the sixth invention, it becomes possible to make the leading-out of the second fluid pipe simple.

In the hot water supply system pertaining to the seventh invention, it becomes possible to distribute the high-temperature liquid fluid stored in the first liquid fluid storage container to each dwelling unit of a multi-dwelling housing complex.

In the hot water supply system pertaining to the eighth invention, it becomes possible to store liquid fluid of different temperatures in each of the first liquid fluid storage containers, for example. Further, in this hot water supply system, even when the liquid fluid in one of the first liquid fluid storage containers is centrally used, the liquid fluid in another of the first liquid fluid storage containers can be immediately compensated.

In the hot water supply system pertaining to the ninth invention, it becomes possible to immediately distribute the liquid fluid of various temperatures stored in the plurality of first liquid fluid storage containers to each dwelling unit of a multi-dwelling housing complex.

In the hot water supply system pertaining to the tenth invention, it becomes possible to store a relatively low-temperature liquid fluid in the first liquid fluid storage containers, further heat that liquid fluid in the first radiators after that liquid fluid has been supplied to the second liquid fluid storage containers, and generate a high-temperature liquid fluid. Consequently, in this hot water supply system, it becomes possible to hold liquid fluid of a desired temperature in each dwelling unit.

In the hot water supply system pertaining to the eleventh invention, reasonable fee management can be performed in a multi-dwelling housing complex.

In the hot water supply system pertaining to the twelfth invention, the contribution percentage of each of the heat source units with respect to heating the liquid fluid stored in the first liquid fluid storage container can be determined. As a result, it becomes possible to perform distribution of electrical bills corresponding to the contribution percentage of each of the heat source units in a multi-dwelling housing complex.

### BRIEF DESCRIPTION OF THE DRAWINGS

FIG. 1 is a configural diagram of a hot water supply system pertaining to a first embodiment of the present invention.
FIG. 2 is a configural diagram of a heat source unit and a floor heating unit employed in the hot water supply system pertaining to the first embodiment of the present invention.
FIG. 3 is a functional block diagram of an individual management unit employed in the hot water supply system pertaining to the first embodiment of the present invention.
FIG. 4 is a functional block diagram of a central management unit employed in the hot water supply system pertaining to the first embodiment of the present invention.
FIG. 5 is a configural diagram of a hot water supply system pertaining to a second embodiment of the present invention.
FIG. 6 is a configural diagram of a heat source unit and an auxiliary tank unit employed in the hot water supply system pertaining to the second embodiment of the present invention.
FIG. 7 is a functional block diagram of a central management unit employed in the hot water supply system pertaining to the second embodiment of the present invention.
FIG. 8 is a configural diagram of a conventional hot water supply system.

### DESCRIPTION OF THE REFERENCE NUMERALS

- 1: Hot Water Supply System
- 10a, 10b, ..., 10z: Heat Source Units
- 11a: Compressor
- 13a: Air Heat Exchanger (Evaporator)
- 14a: Electrically Powered Expansion Valve (Pressure Reducing Mechanism)
- 15a: First Water Heat Exchanger (First Radiator)
- 19a: Flow Path Switching Unit (Flow Rate Control Mechanism)
- 20a: Refrigerant Circuit
- 24a: First Water Pipe (First Fluid Pipe)
- 51 a: Heat Exchange Panel (Heat Exchanger)
- 71a, 71, ..., 71z: Second Water Heat Exchangers (Second Radiators)
- 72: Fifth Water Pipe (Second Fluid Pipe)
- 80: Water Supply/Hot Water Supply Tank (First Liquid Fluid Storage Container)
- 94a, 94b, ..., 94z, 194a, 194b, ..., 194z: Hot Water Supply Branched Pipes (Liquid Fluid Delivery Pipes)
- 98a, 98b, ..., 98z: Temperature Sensors (Temperature Measuring Means)
- 99a, 99b, ..., 99z: Flowmeters (Flow Rate Measuring Means)
- 102, 302: Second Control Components (Central Control Devices)
- 151 a: Hot Water Storage Tank (Second Liquid Fluid Storage Container)
- 180A: First Water Supply/Hot Water Supply Tank (First Liquid Fluid Storage Container)
- 180B: Second Water Supply/Hot Water Supply Tank (First Liquid Fluid Storage Container)
- 210A: First Compensation-use Communicating Pipe (Communicating Pipe)
- 210B: Second Compensation-use Communicating Pipe (Communicating Pipe)

- 282a, 282b, ..., 282z: Energy Measuring Components (Energy Measuring Means)

### BEST MODES FOR IMPLEMENTING THE INVENTION

### <First Embodiment>

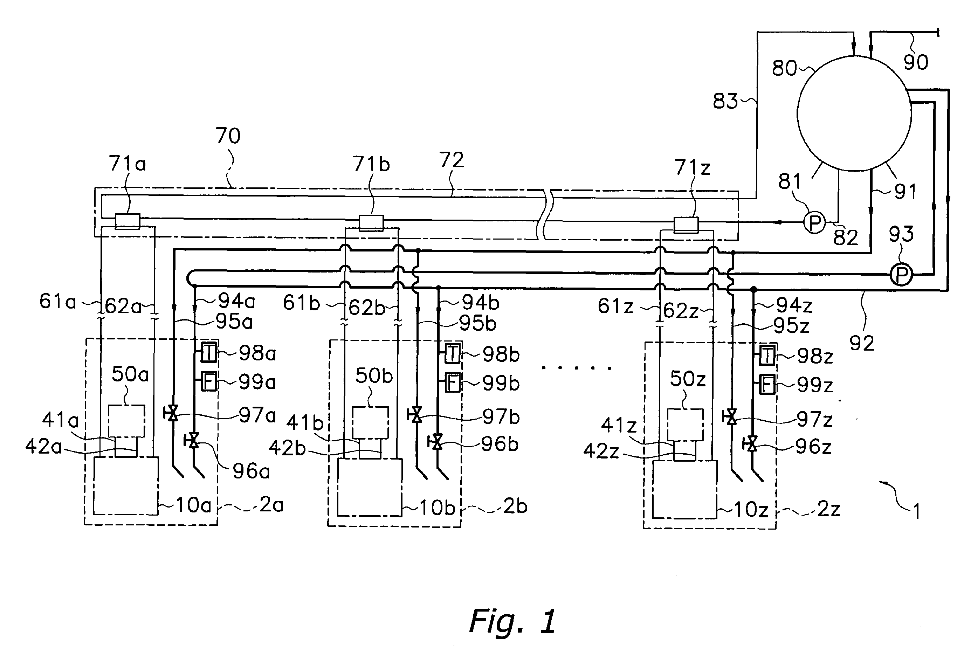

Here, a hot water supply system 1 pertaining to a first embodiment of the present invention will be described using the drawings of FIG. 1 to FIG. 4.

### <Overall Configuration of Hot Water Supply System>

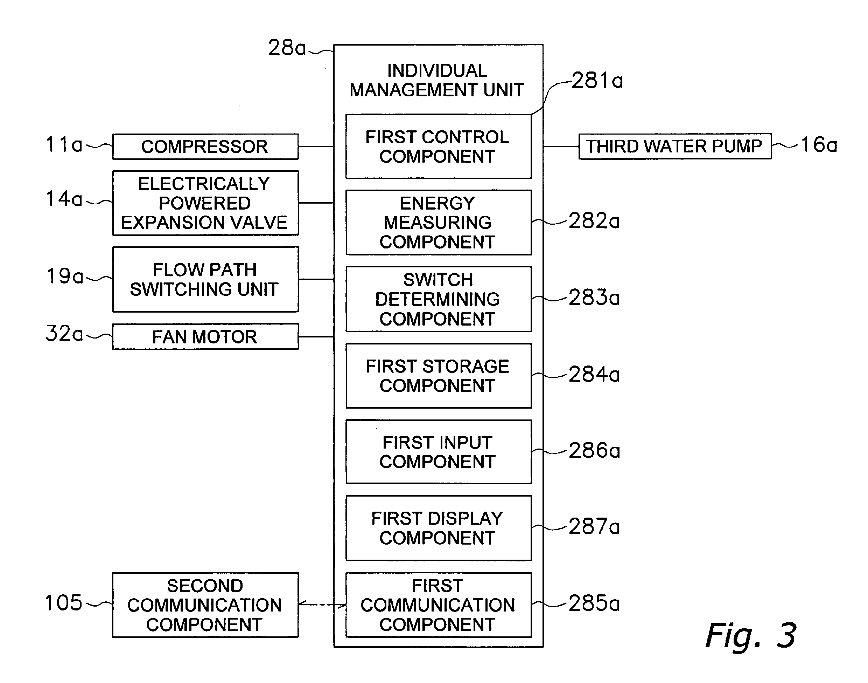

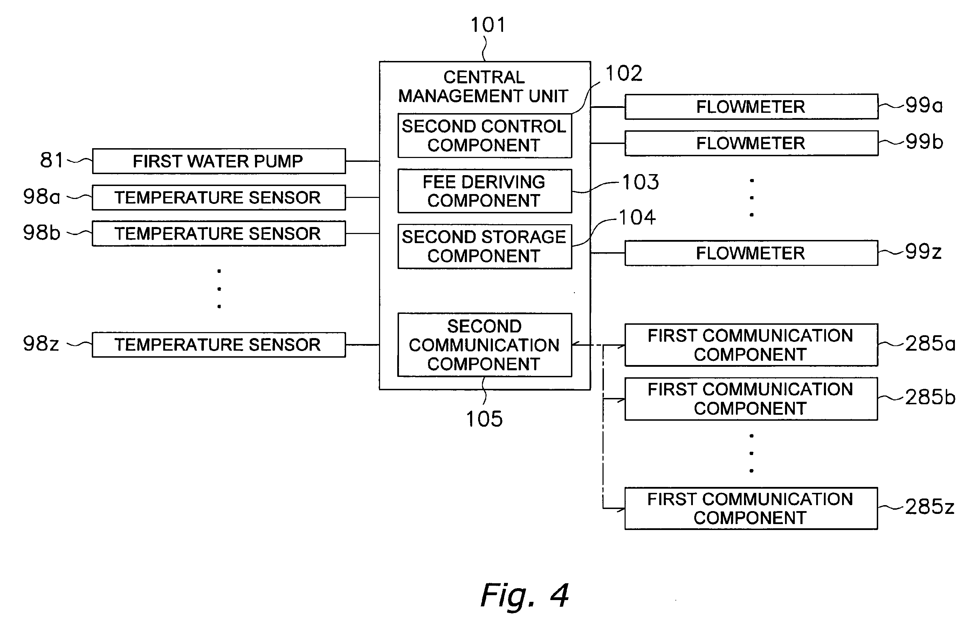

The hot water supply system 1 is a hot water supply system for a multi-dwelling housing complex and, as shown in FIG. 1, is mainly configured by heat source units 10a, 10b, ..., 10z, floor heating units 50a, 50b, ..., 50z, a water heating unit 70, a water supply/hot water supply tank 80, a first water pump 81, a first water supply main 90, a second water supply main 91, water supply branched pipes 95a, 95b, ..., 95z, a hot water supply main 92, hot water supply branched pipes 94a, 94b, ..., 94z, a second water pump 93, individual management units 28a (see FIG. 3) and a central management unit 101 (see FIG. 4).

Below, the configural elements of the hot water supply system 1 will be described in detail individually.

### (1) Heat Source Units

The heat source units 10a, 10b, ..., 10z are so-called heat pump type heat source units and are installed on verandas or balconies of dwelling units 2a, 2b, ..., 2z of a multi-dwelling housing complex. Here, the plural heat source units are represented by the reference numerals 10a, 10b, ..., 10z. It will be noted that because they all have the same configuration and specification, the heat source units will be described below using the heat source unit of reference numeral 10a as a representative.

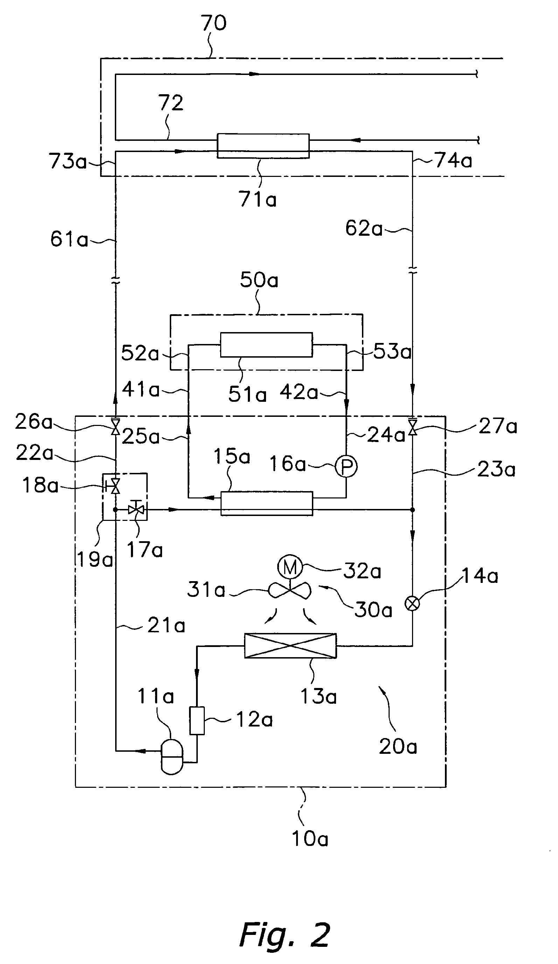

The heat source unit 10a is, as shown in FIG. 2, mainly disposed with a refrigerant circuit 20a that is formed as a result of a compressor 11a, a flow path switching unit 19a, a first water heat exchanger 15a, an electrically powered expansion valve 14a, an air heat exchanger 13a and an accumulator 12a being sequentially connected by a first refrigerant pipe 21a. The compressor 11a is a positive displacement inverter type compressor and becomes a drive source that compresses gaseous CO₂ (carbon dioxide) refrigerant filling the inside of the refrigerant circuit 20a and causes the refrigerant to circulate inside the refrigerant circuit 20a. It will be noted that, in the refrigerant circuit 20a pertaining to the present embodiment, the CO₂ refrigerant is controlled to reach a supercritical pressure on a high pressure side. The flow path switching unit 19a is, as shown in FIG. 2, disposed on a discharge side of the compressor 11a and mainly includes one inlet and two outlets. A refrigerant passage extending from the inlet is branched midway and connected to inlet sides of a first electromagnetic valve 17a and a second electromagnetic valve 18a. Additionally, in the present embodiment, an outlet side of the first electromagnetic valve 17a is connected to the first water heat exchanger 15a via the refrigerant passage and the first refrigerant pipe 21a, and an outlet side of the second electromagnetic valve 18a is connected to a first close valve 26a via the refrigerant passage and a first branched refrigerant pipe 22a. It will be noted that, in this flow path switching unit 19a, the second electromagnetic valve 18a is closed when the first electromagnetic valve 17a is open, and the first electromagnetic valve 17a is closed when the second electromagnetic valve 18a is open. The first water heat exchanger 15a is mainly disposed with a first water jacket and a second refrigerant pipe that is disposed inside the first water jacket and folded back several times. Additionally, in this first water heat exchanger 15a, water or warm water flowing into the first water jacket from a first water pipe 24a exchanges heat with high-temperature supercritical refrigerant flowing into the second refrigerant pipe from the first refrigerant pipe 21 a and becomes high-temperature warm water (hot water), and, at the same time, the supercritical refrigerant flowing through the second refrigerant pipe is cooled. It will be noted that the high-temperature warm water (hot water) leaving the first water jacket thereafter flows into a second water pipe 25a. In the electrically powered expansion valve 14a, the supercritical refrigerant that has been cooled in the first water heat exchanger 15a is depressurized. In the air heat exchanger 13a, the supercritical refrigerant that has been depressurized by the electrically powered expansion valve 14a exchanges heat with air blown by a fan 30a and becomes gas refrigerant, and, at the same time, that air is cooled. It will be noted that the fan 30a is, as shown in FIG. 2, mainly configured by an impeller 31a and a fan motor 32a, and the fan 30a exhibits a blowing function as a result of the impeller 31a being driven to rotate by the fan motor 32a. The accumulator 12a is a compressor protector for ensuring that liquid refrigerant does not enter the compressor 11 a, and the accumulator 12a is disposed between an outlet side of the air heat exchanger 13a and a suction side of the compressor 11a. Additionally, the gas refrigerant passing through the accumulator 12a is sucked into the compressor 11 a.

Further, in this refrigerant circuit 20a, a second branched refrigerant pipe 23a is branched and extends from the first refrigerant pipe 21 a that interconnects an outlet side of the first water heat exchanger 15a and the electrically powered expansion valve 14a, and the second branched refrigerant pipe 23a is connected to a second close valve 27a.

Further, as shown in FIG. 2, a third water pump 16a is disposed in this heat source unit 10a. Further, the third water pump 16a becomes a drive source that delivers water or warm water flowing through the first water pipe 24a to the first water heat exchanger 15a and a heat exchange panel 51a (described later) of the floor heating unit 50a.

### (2) Floor Heating Units

The floor heating units 50a, 50b, ..., 50z are installed in floor surfaces or the like of rooms of the dwelling units 2a, 2b, ..., 2z of the multi-dwelling housing complex. Here, the plural floor heating units are represented by the reference numerals 50a, 50b, ..., 50z. It will be noted that because they all have the same configuration and specification, the floor heating units will be described below using the floor heating unit of reference numeral 50a as a representative.

The floor heating unit 50a is, as shown in FIG. 2, mainly disposed with a third water pipe 52a, a fourth water pipe 53a, and a heat exchange panel 51a. The third water pipe 52a is, as shown in FIG. 2, connected to the second water pipe 25a of the heat source unit 10a via a first communication-use water pipe 41a. The fourth water pipe 53a is, as shown in FIG. 2, connected to the first water pipe 24a of the heat source unit 10a via a second communication-use water pipe 42a. The heat exchange panel 51a is, as shown in FIG. 2, connected to the third water pipe 52a and the fourth water pipe 53a and warms the floor of the room by warm water flowing inside the heat exchange panel 51 a. It will be noted that the water or warm water delivered from the heat exchange panel 51a flows through the fourth water pipe 53a and the second communication-use water pipe 42a, again flows into the first water pipe 24a of the heat source unit 10a, and is warmed by the first water heat exchanger 15a. It will be noted that the flow of this water or warm water is generated by the third water pump 16a of the heat source unit 10a (refer to the arrows in FIG. 2).

### (3) Water Heating Unit

The water heating unit 70 is a unit for heating the water or warm water stored in the water supply/hot water supply tank 80 to generate high-temperature warm water (hot water) and is installed on a roof of the multi-dwelling housing complex. This water heating unit 70 is disposed with third refrigerant pipes 73a, 73b, ..., 73z, fourth refrigerant pipes 74a, 74b, ..., 74z, second water heat exchangers 71a, 71b, ..., 71z, and a fifth water pipe 72. The third refrigerant pipes 73a, 73b, ..., 73z are connected to the first close valves 26a, 26b, ..., 26z of the heat source units 10a, 10b, ..., 10z via first communication-use refrigerant pipes 61 a, 61b,..., 61z, and are connected to the second water heat exchangers 71a, 71b, ..., 71z. The fourth refrigerant pipes 74a, 74b, ..., 74z are connected to the second close valves 27a, 27b, ..., 27z of the heat source units 10a, 10b, ..., 10z via second communication-use refrigerant pipes 62a, 62b, ..., 62z, and are connected to the second water heat exchangers 71 a, 71b, ..., 71 z. The second water heat exchangers 71a, 71b, ..., 71z are mainly disposed with second water jackets and fifth refrigerant pipes that are disposed inside the second water jackets and folded back several times. Additionally, in these second water heat exchangers 71a, 71b, ..., 71z, water or warm water that is delivered by the first water pump 81 from the water supply/hot water supply tank 80, passes through the fifth water pipe 72 and flows into the second water jackets exchanges heat with high-temperature supercritical refrigerant flowing into the fifth refrigerant pipes and becomes high-temperature warm water, and, at the same time, the supercritical refrigerant flowing through the fifth refrigerant pipes is cooled. It will be noted that the high-temperature warm water leaving the second water jackets is thereafter returned to the water supply/hot water supply tank 80 through a seventh water pipe 83 (refer to the arrows in FIG. 2).

### (4) Water Supply/Hot Water Supply Tank

The water supply/hot water supply tank 80 is a tank that simultaneously stores water and high-temperature warm water (hot water) and is installed on the roof of the multi-dwelling housing complex. Here, that "the water supply/hot water supply tank 80 simultaneously stores water and high-temperature warm water (hot water)" is attributed to the fact that temperature irregularities arise in liquid fluid inside a first liquid fluid storage container, with low-temperature liquid fluid being present in the lower portion of the first liquid fluid storage container and high-temperature liquid fluid being present in the upper portion of the first liquid fluid storage container.

### (5) First Water Pump

The first water pump 81 is connected to the water supply/hot water supply tank 80 via an eighth water pipe 82 and plays the role of delivering the water and warm water (hot water) stored in the water supply/hot water supply tank 80 to the fifth water pipe 72 of the water heating unit 70.

### (6) First Water Supply Main

The first water supply main 90 is a water supply pipe that extends from a waterworks pipe (not shown) buried underground to the water supply/hot water supply tank 80 installed on the roof of the multi-dwelling housing complex. It will be noted that the water supplied from the waterworks pipe is supplied to the water supply/hot water supply tank 80 by a pump (not shown) disposed midway in the first water supply main 90.

### (7) Second Water Supply Main

The second water supply main 91 is a water supply pipe that becomes the backbone for supplying water to each of the dwelling units 2a, 2b, ..., 2z of the multi-dwelling housing complex, is connected to the lower portion of the water supply/hot water supply tank 80, and runs through the inside of the building frame of the multi-dwelling housing complex.

### (8) Water Supply Branched Pipes

The water supply branched pipes 95a, 95b, ..., 95z are water supply pipes that are branched from the second water supply main 91 and extend to the dwelling units 2a, 2b, ..., 2z of the multi-dwelling housing complex. Further, first manual valves 97a, 97b, ..., 97z are disposed on terminal ends of these water supply branched pipes 95a, 95b, ..., 95z. It will be noted that these first manual valves 97a, 97b, ..., 97z are opened and closed in response to the will of the residents of the dwelling units 2a, 2b, ..., 2z. Further, unillustrated water meters are connected to these water supply branched pipes 95a, 95b, ..., 95z.

### (9) Hot Water Supply Main

The hot water supply main 92 is a hot water supply pipe that becomes the backbone for supplying hot water to each of the dwelling units 2a, 2b, ..., 2z of the multi-dwelling housing complex, runs through the inside of the building frame of the multi-dwelling housing complex from the upper portion of the water supply/hot water supply tank 80, and again returns to the water supply/hot water supply tank 80.

### (10) Hot Water Supply Branched Pipes

The hot water supply branched pipes 94a, 94b, ..., 94z are hot water supply pipes that are branched from the hot water supply main 92 and extend to the dwelling units 2a, 2b, ..., 2z of the multi-dwelling housing complex. Further, second manual valves 96a, 96b, ..., 96z are disposed on terminal ends of these hot water supply branched pipes 94a, 94b, ..., 94z. It will be noted that these second manual valves 96a, 96b, ..., 96z are opened and closed in response to the will of the residents of the dwelling units 2a, 2b, ..., 2z. Further, temperature sensors 98a, 98b, ..., 98z and flowmeters 99a, 99b, ..., 99z are attached to these hot water supply branched pipes 94a, 94b, ..., 94z. It will be noted that these temperature sensors 98a, 98b, ..., 98z and flowmeters 99a, 99b, ..., 99z are communicably connected to the central management unit 101 such that how much hot water of what °C the residents of each of the dwelling units 2a, 2b, ..., 2z have used can be understood.

### (11) Second Water Pump

The second water pump 93 is disposed in the hot water supply main 92 downstream of the bifurcation point of the hot water supply branched pipe 94a and becomes a drive source that again returns the hot water flowing in the hot water supply main 92 to the water supply/hot water supply tank 80.

### (12) Individual Management Units

The individual management units 28a are installed on a wall surface or the like of a room in each of the dwelling units 2a, 2b, ..., 2z of the multi-dwelling housing complex. The individual management units installed in the dwelling units 2a, 2b, ..., 2z all have the same configuration and specification, so the individual management units will be described below using the individual management unit for the floor heating unit represented by reference numeral 50a as a representative.

The individual management unit 28a, for example, controls the heat source unit 10a, 10b, ..., 10z in response to the demands of the residents of the dwelling unit 2a, 2b, ..., 2z or in accordance with a command from the central management unit 101, collect necessary data from the heat source unit 10a, 10b, ..., 10z, and transmit the data to the central management unit 101. As shown in FIG. 3, the individual management units 28a is mainly configured by a first control component 281a, an energy measuring component 282a, a switch determining component 283a, a first storage component 284a, a first input component 286a, a first display component 287a and a first communication component 285a.

The first control component 281a is electrically connected to the compressor 11a, the electrically powered expansion valve 14a, the flow path switching unit 19a, the fan motor 32a and the third water pump 16a via a dedicated interface (not shown) and controls each of the devices 11 a, 14a, 16a, 19a and 32a in accordance with an individual control program stored in the first storage component 284a.

The energy measuring component 282a is communicably connected to the compressor 11a, the electrically powered expansion valve 14a, the flow path switching unit 19a and the fan motor 32a via a dedicated interface (not shown) and measures the quantity of electrical energy that each of the devices 11a, 14a, 19a and 32a consumes when the second electromagnetic valve 18a is in an open state.

The switch determining component 283a is electrically connected to the flow path switching unit 19a and switches between opened and closed states of the first electromagnetic valve 17a and the second electromagnetic valve 18a in response to the demands of the residents of the dwelling unit 2a, 2b, ..., 2z or in accordance with a command from the central management unit 101.

In the first storage component 284a are stored programs such as the aforementioned individual control program and a communication program, and data necessary for performing control and communication.

A floor heating ON/OFF button, a temperature adjustment button, and the like are disposed in the first input component 286a, and when those buttons are pressed by residents or the like of the dwelling unit 2a, 2b, ..., 2z, starting/stopping and positive displacement control of the compressor 11a of the heat source unit 10a, 10b, ..., 10z, control of the opening of the electrically powered expansion valve 14a, and status switching of the flow path switching unit 19a are performed.

The first display component 287a displays the start/stop status of floor heating, the set temperature, the operating area, and whether or not the heat source unit 10a, 10b, ..., 10z are being centrally controlled.

The first communication component 285a is communicable with a second communication component 105 of the central management unit 101, transmits status data and energy measurement data of the heat source unit 10a, 10b, ..., 10z to the central management unit 101, and receives control signals and the like transmitted from the central management unit 101.

### (13) Central Management Unit

The central management unit 101 is installed in a management room, a machine room, or the like of the multi-dwelling housing complex.

This central management unit 101 is for centrally managing the heat source units 10a, 10b, ..., 10z installed in the dwelling units 2a, 2b, ..., 2z and, as shown in FIG. 4, is mainly configured by a second control component 102, a fee deriving component 103, a second storage component 104 and a second communication component 105.

The second control component 102 is electrically connected to the first water pump 81 via a dedicated interface (not shown), controls the first water pump 81 in accordance with a central control program stored in the second storage component 104, generates control signals for centrally controlling the plural heat source units 10a, 10b, ..., 10z, and transmits the control signals to the first communication components 285a, 285b, ..., 285z of the individual management units 28a through the second communication component 105.

The fee deriving component 103 is communicably connected to the temperature sensors 98a, 98b, ..., 98z and the flowmeters 99a, 99b, ..., 99z via a dedicated interface (not shown) and derives hot water supply fees in regard to each of the dwelling units 2a, 2b, ..., 2z in accordance with a fee derivation program stored in the second storage component 104. Examples of methods of deriving the hot water supply fees include a method of deriving the hot water supply fees by checking temperature data and use flow rate data against a fee management table, for example. Further, this fee deriving component 103 calculates the contribution percentage of each of the heat source units 10a, 10b, ..., 10z to heating the water or warm water stored in the water supply/hot water supply tank 80 by utilizing the energy measurement data transmitted from the first communication components 285a, 285b, ..., 285z to determine reduced fees. Examples of methods of calculating these reduced fees include a method of multiplying the electrical power unit price by the sum of the energy measurement data and then multiplying the contribution percentage of each of the heat source unites 10a, 10b, ..., 10z.

In the second storage component 104 are stored programs such as the aforementioned central control program and fee derivation program, history data such as temperature data, use flow rate data and energy measurement data, and a fee management table.

The second communication component 105 is communicable with the first communication components 285a, 285b, ..., 285c of the plural individual management units 28a, transmits control signals and the like generated by the second control component 102 to the individual management units 28a, and receives status data and energy measurement data of the heat source units transmitted from the first communication components 285a, 285b, ..., 285z of the individual management units 28a.

### <Functions of Hot Water Supply System>

### (1) Floor Heating Function

Here, the floor heating function in the dwelling unit 2a will be representatively described.

In the dwelling unit 2a, when a resident switches ON the floor heating ON/OFF button with the first input component 286a of the individual management unit 28a, then the first control component 281a closes the first electromagnetic valve 17a of the flow path switching unit 19a, opens the second electromagnetic valve 18a, and, at the same time, transmits an operation start command to the compressor 11 a. Further, at this time, the electrically powered expansion valve 14a is set to an appropriate opening and, at the same time, the third water pump 16a starts operation. It will be noted that, at this time, the first close valve 26a and the second close valve 27a are opened.

Then, when the compressor 11 a starts operation, gas refrigerant is sucked into and compressed by the compressor 11a, thereafter reaches a supercritical state, is sent to the second refrigerant pipe of the first water heat exchanger 15a via the first electromagnetic valve 17a, exchanges heat with water or warm water flowing through the first water jacket of the first water heat exchanger 15a, and is cooled. In other words, at this time, the water or warm water flowing through the second refrigerant pipe is heated and becomes high-temperature warm water (hot water). It will be noted that this high-temperature warm water (hot water) is sent to the heat exchange panel 51a of the floor heating unit 50a by the third water pump 16a, warms the floor and space of the dwelling unit 2a, is cooled at the same time, and is thereafter again sent to the first water heat exchanger 15a by the third water pump 16a.

Then, the supercritical refrigerant that has been cooled is sent to the electrically powered expansion valve 14a, depressurized, thereafter sent to the air heat exchanger 13a, and exchanges heat with air blown form the fan 30a, whereby it is evaporated and becomes gas refrigerant.

Then, that gas refrigerant is again sucked into the compressor 11 a via the accumulator 12a. In this manner, floor heating operation is performed (refer to the arrows in FIG 2).

### (2) Function of Heating Water inside Water Supply/Hot Water Supply Tank

An unillustrated temperature sensor is disposed in the water supply/hot water supply tank 80, and this temperature sensor is communicably connected to the central management unit 101. Additionally, when the output value of this temperature sensor falls below a lower limit value, then the second control component 102 causes the first water pump 81 to operate, at the same time requests floor heating ON/OFF status data with respect to the individual management units 28a, identifies the heat source units 10a, 10b, ..., 10z that are not performing floor heating operation at that point in time on the basis of that ON/OFF status data, and transmits control signals to the first communication components 285a, 285b, ..., 285z of the individual management units 28a through the second communication component 105.

When the first communication components 285a, 285b, ..., 285z receive the control signals from the second communication component 105, the first control components 281a open the first electromagnetic valves 17a of the flow path switching units 19a, closes the second electromagnetic valves 18a, and, at the same time, transmit an operation start command to the compressors 11a. Further, at this time, the electrically powered expansion valves 14a are set to an appropriate opening. It will be noted that, at this time, the first close valves 26a and the second close valves 27a are opened.

Then, when the compressors 11a starts operation, gas refrigerant is sucked into and compressed by the compressors 11a, thereafter reaches a supercritical state, is sent to the fifth refrigerant pipes of the second water heat exchangers 71a, 71b, ..., 71z via the second electromagnetic valves 18a, the first close valves 26a and the first communication-use refrigerant pipes 6 1 a, 61b, ..., 61z, exchanges heat with water or warm water flowing through the second water jackets of the second water heat exchangers 71 a, 71b, ..., 71z, and is cooled. In other words, at this time, the water or warm water flowing through the fifth refrigerant pipes is heated and becomes high-temperature warm water (hot water). It will be noted that this high-temperature warm water (hot water) is sent to the water supply/hot water supply tank 80 by the first water pump 81. Then, when the high-temperature warm water (hot water) that has been sent to the water supply/hot water supply tank 80 has not reached a set hot water temperature, then that warm water (hot water) is further sent to the second water heat exchangers 71a, 71b, ..., 71z by the first water pump 81. Conversely, when the high-temperature warm water (hot water) that has been sent to the water supply/hot water supply tank 80 has reached the set hot water temperature, then the compressors 11 a and the first water pump 81 are caused to stop.

Then, the supercritical refrigerant that has been cooled is sent to the electrically powered expansion valves 14a via the second communication-use refrigerant pipes 62a, 62b, ..., 62z and the second close valves 27a, depressurized, thereafter supplied to the air heat exchangers 13a, and exchanges heat with air blown from the fans 30a, whereby it is evaporated and becomes gas refrigerant.

Then, that gas refrigerant is again sucked into the compressors 11 a via the accumulator 12a. In this manner, operation of heating the water inside the water supply/hot water supply tank is performed (refer to the arrows in FIG. 2).

It will be noted that, during this operation of heating the water inside the water supply/hot water supply tank, when floor heating ON/OFF is ON during central control, floor heating is given priority.

### <Characteristics of Hot Water Supply System>

### (1)

In the hot water supply system 1 pertaining to the present embodiment, the plural heat source units 10a, 10b, ..., 10z are installed in the dwelling units 2a, 2b, ..., 2z, and each of those heat source units 10a, 10b, ..., 10z includes the refrigerant circuit 20a that is formed by sequentially connecting the compressor 11a, the first water heat exchanger 15a, the electrically powered expansion valve 14a and the air heat exchanger 13a by the first refrigerant pipe 21 a. Further, these heat source units 10a, 10b, ..., 10z are connected to the floor heating units 50a, 50b, ..., 50z via the first water heat exchangers 15a. Further, the second water heat exchangers 71 a are disposed in the water heating unit 70 installed on the roof, and these second water heat exchangers 71a are connected in parallel with the first water heat exchangers 15a to the discharge side of the compressors 11 a of the heat source units 10a, 10b, ..., 10z. Additionally, the water or warm water stored in the water supply/hot water supply tank 80 installed on the roof is heated by the water heating unit 70. For this reason, in this hot water supply system 1, not only are warm environments of the dwelling units 2a, 2b, ..., 2z supplied by just the heat source units 10a, 10b, ..., 10z installed in the dwelling units 2a, 2b, ..., 2z, but shared hot water can be held in the water supply/hot water supply tank 80. In other words, in this hot water supply system 1, the heat source machine of the central hot water supply machine that had conventionally been installed becomes unnecessary. Consequently, in this hot water supply system 1, a repair reserve fund corresponding to the heat source machine and the like becomes unnecessary, and the economical burden on the residents of the condominium multi-dwelling housing complex becomes lighter.

### (2)

In the hot water supply system 1 pertaining to the present embodiment, the central management unit 101 and the flow path switch units 19a are disposed. For this reason, in this hot water supply system 1, the heat source units 10a, 10b, ..., 10z that are not being utilized can be selected and utilized to heat the water or warm water inside the water supply/hot water supply tank 80.

### (3)

In the hot water supply system 1 pertaining to the present embodiment, the water supply/hot water supply tank 80 doubles as a water supply tank and a hot water supply tank. For this reason, in this hot water supply system 1, costs corresponding to the shared hot water supply tank can be reduced.

### (4)

In the hot water supply system 1 pertaining to the present embodiment, the flowmeters 99a, 99b, ..., 99z measure the flow rate of the warm water (hot water) flowing through the hot water supply branched pipes 94a, 94b, ..., 94z, the temperature sensors 98a, 98b, ..., 98z measure the temperature of the warm water (hot water) flowing through the hot water supply branched pipes 94a, 94b, ..., 94z, and the central management unit 101 derives the hot water supply fees in regard to each of the dwelling units 2a, 2b, ..., 2z. For this reason, in this hot water supply system 1, reasonable hot water supply fee management can be performed.

### (5)

In the hot water supply system pertaining to the present embodiment, the central management unit 101 calculates the contribution percentage of each of the heat source units 10a, 10b, ..., 10z to heating the water or warm water stored in the water supply/hot water supply tank 80 by utilizing the energy measurement data supplied from the individual management units 28a to determine reduced fees. For this reason, in this hot water supply system 1, it becomes possible to perform distribution of electrical bills corresponding to the contribution percentage of each of the heat source units 10a, 10b, ..., 10z.

### <Modifications>

### (A)

In the hot water supply system 1 pertaining to the preceding embodiment, the flow path switching units 19a were employed, but instead of these, flow rate adjusting units may also be employed. In other words, the hot water supply system may also be configured such that it can distribute the supercritical refrigerant discharged from the compressors 11 a in an appropriate ratio to the first water heat exchangers 15a and the second water heat exchangers 71 a. By configuring the hot water supply system in this manner, in this hot water supply system 1, the floor heating function and the function of heating the water inside the water supply/hot water supply tank can be simultaneously realized.

### (B)

In the hot water supply system 1 pertaining to the preceding embodiment, the third water pumps 16a were disposed in the heat source units 10a, 10b, ..., 10z, but instead of these, the third water pumps 16a may also be disposed in the floor heating units 50a.

### (C)

In the hot water supply system 1 pertaining to the preceding embodiment, carbon dioxide was employed as the refrigerant, but instead of this, a refrigerant such as ammonia, hydrocarbon, or fluorocarbon may also be utilized. In this case, the first water heat exchangers 15a and the second water heat exchangers 71a function as condensers not as gas coolers.

### (D)

In the hot water supply system 1 pertaining to the preceding embodiment, the water heating unit 70 was installed on the roof, but the water heating unit 70 may also be installed in an underground machine room or the like.

### (E)

In the hot water supply system 1 pertaining to the preceding embodiment, the hot water supply branched pipes 94a, 94b, ..., 94z that are branched from the hot water supply main 92 are plurally disposed and configured to supply hot water to the dwelling units 2a, 2b, ..., 2z, but the hot water supply system may also be configured such that just one of the hot water supply branched pipes 94a, 94b, ..., 94z is disposed and the warm water (hot water) in the water supply/hot water supply tank is used just for a shared bath or pool.

### (F)

In the hot water supply system 1 pertaining to the preceding embodiment, the heat source units 10a, 10b, ..., 10z were connected to the floor heating units 50a, 50b, ..., 50z via the first water heat exchangers 15a, but the heat source units 10a, 10b, ..., 10z may also be connected to coil components of fan coil units or the like via the first water heat exchangers 15a. By configuring the hot water supply system in this manner, heating of the dwelling units 2a, 2b, ..., 2z becomes possible.

### (G)

In the hot water supply system pertaining to the preceding embodiment, the flow path switching units 19a disposed with the first electromagnetic valves 17a and the second electromagnetic valves 18a were employed in the refrigerant circuits 20a, but instead of these, a three-way valves may also be employed.

### (H)

In the hot water supply system 1 pertaining to the preceding embodiment, the positive displacement inverter type compressor 11 a was installed in the heat source units 10a, 10b, ..., 10z, but instead of this, a non-inverter type compressor may also be installed.

### <Second Embodiment>

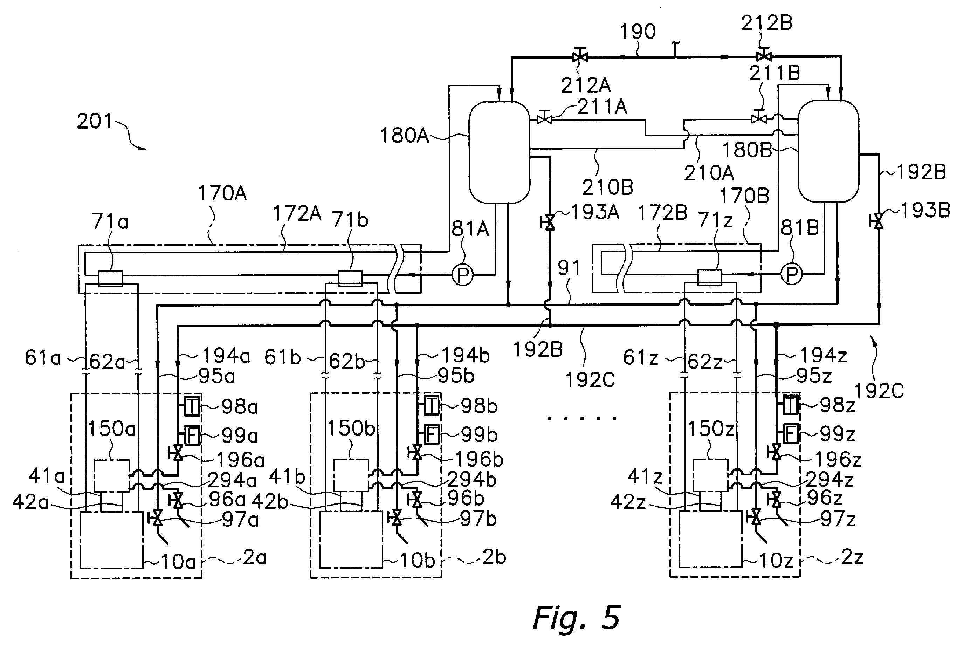

Here, a hot water supply system 201 pertaining to a second embodiment of the present invention will be described using the drawings of FIG. 5 to FIG. 7. It will be noted that, because there are configural elements in the hot water supply system 201 pertaining to the second embodiment that correspond to the configural elements of the hot water supply system 1 pertaining to the first embodiment, description in regard to those corresponding portions will be omitted by adding reference numerals that are the same as the reference numerals used to describe the hot water supply system 1 pertaining to the first embodiment.

### <Overall Configuration of Hot Water Supply System>

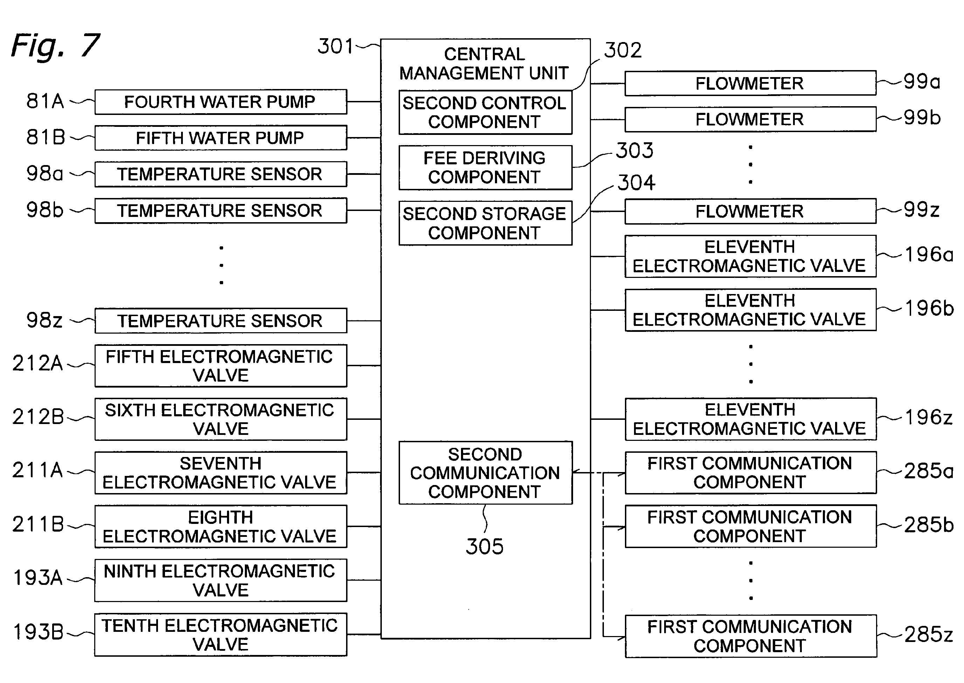

The hot water supply system 201 is a hot water supply system for a multi-dwelling housing complex and, as shown in FIG. 5, is mainly configured by heat source units 10a, 10b, ..., 10z, hot water storage tank units 150a, 150b, ..., 150z, a first water heating unit 170A, a second water heating unit 170B, a first water supply/hot water supply tank 180A, a second water supply/hot water supply tank 180B, a fourth water pump 81 A, a fifth water pump 81B, a first water supply main 190, a second water supply main 91, water supply branched pipes 95a, 95b, ..., 95z, a hot water supply main 192, hot water supply branched pipes 94a, 94b, ..., 94z, terminal hot water supply pipes 194a, 194b, ..., 194z, individual management units 28a (see FIG. 3) and a central management unit 301 (see FIG. 7).

Below, the configural elements of the hot water supply system 201 will be described in detail individually.

### (1) Heat Source Units

The heat source units 10a, 10b, ..., 10z are the same as the heat source units 10a, 10b, ..., 10z that are employed in the hot water supply system 1 pertaining to the first embodiment. For that reason, description will be omitted here.

### (2) Hot Water Storage Tank Units

The hot water storage tank units 150a, 150b, ..., 150z are box-like bodies that include compact tanks and are installed in proximity to the heat storage units 10a, 10b, ..., 10z on verandas or balconies of the dwelling units 2a, 2b, ..., 2z of the multi-dwelling housing complex. Here, the plural hot water storage tank units are represented by the reference numerals 150a, 150b, ..., 150z. It will be noted that because these all have the same configuration and specification, the hot water storage tank units will be described below using the hot water storage tank unit of reference numeral 150a as a representative.

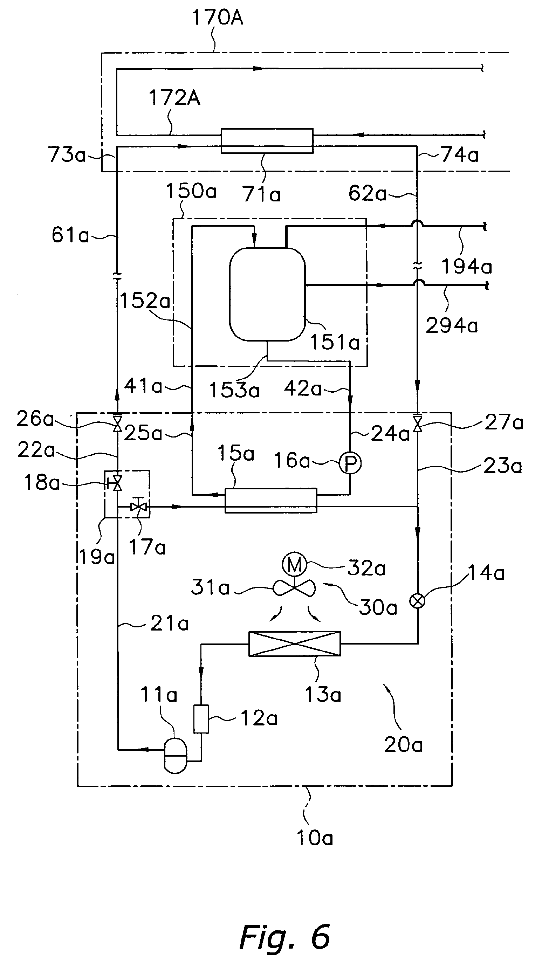

The hot water storage tank unit 150a is, as shown in FIG. 6, mainly disposed with a ninth water pipe 152a, a tenth water pipe 153a and a hot water storage tank 151a. The ninth water pipe 152a is, as shown in FIG 6, connected to the second water pipe 25a of the heat source unit 10a via the first communication-use water pipe 41 a. The tenth water pipe 153a is, as shown in FIG. 6, connected to the first water pipe 24a of the heat source unit 10a via the second communication-use water pipe 42a. The hot water storage tank 151 a is, as shown in FIG. 6, connected to the ninth water pipe 152a and the tenth water pipe 153a and is for storing warm water (hot water) that has been warmed in the first water heat exchanger 15a. It will be noted that the water or warm water inside the hot water storage tank 151a is caused to circulate by the third water pump 16a of the heat source unit 10a until the output value of a temperature sensor disposed inside the hot water storage tank 151a reaches a constant value. Further, the hot water supply branched pipe 94a is connected to the upper portion of this hot water storage tank 151a, and the terminal hot water supply pipe 194a is connected to a place slightly higher than the intermediate portion of the hot water storage tank 151a.

### (3) First Water Heating Unit and Second Water Heating Unit

The first water heating unit 170A and the second water heating unit 170B are units where the water heating unit 70 employed in the hot water supply system 1 pertaining to the first embodiment has been divided into two. It will be noted that, in the present embodiment, the water pipe disposed in the first water heating unit 170A will be called an eleventh water pipe and be represented by the reference numeral 172A. Further, the water pipe disposed in the second water heating unit 170B will be called a twelfth water pipe and be represented by reference numeral 172B. Further, as will be apparent from FIG 5, in the present embodiment, the first water heating unit 170A corresponds to the fourth water pump 81 A and the first water supply/hot water supply tank 180A, and the second water heating unit 170B corresponds to the fifth water pump 8 1 B and the second water supply/hot water supply tank 180B.

### (4) First Water Supply/Hot Water Supply Tank and Second Water Supply/Hot Water Supply Tank

The first water supply/hot water supply tank 180A and the second water supply/hot water supply tank 180B have the same function as that of the water supply/hot water supply tank 80 employed in the hot water supply system 1 pertaining to the first embodiment but are largely different from the water supply/hot water supply tank 80 of the first embodiment in that they are interconnected by a first compensation-use communicating pipe 210A and a second compensation-use communicating pipe 210B. Here, the first compensation-use communicating pipe 210A is disposed so as to have a falling gradient from a seventh electromagnetic valve 211A connected to the first water supply/hot water supply tank 180A towards the second water supply/hot water supply tank 180B. The second compensation-use communicating pipe 210B is disposed so as to have a falling gradient from an eighth electromagnetic valve 211 B connected to the second water supply/hot water supply tank 180B towards the first water supply/hot water supply tank 180A. Further, warm water (hot water) of mutually different temperatures is stored in these water supply/hot water supply tanks 180A and 180B.

### (5) Fourth Water Pump and Fifth Water Pump

The fourth water pump 81 A and the fifth water pump 8 1 B have the same function as that of the first water pump 81 employed in the hot water supply system 1 pertaining to the first embodiment.

### (6) First Water Supply Main

The first water supply main 190 is a water supply pipe that is branched midway and extends from the waterworks pipe buried underground to the first water supply/hot water supply tank 180A and the second water supply/hot water supply tank 180B installed on the roof of the multi-dwelling housing complex. It will be noted that the water supplied from the waterworks pipe (not shown) is supplied to the first water supply/hot water supply tank 180A and the second water supply/hot water supply tank 180B by a pump (not shown) disposed midway in the first water supply main 190. It will be noted that a fifth electromagnetic valve 212A and a sixth electromagnetic valve 212B are disposed between the bifurcation point of the first water supply main 190 and each of the water supply/hot water supply main tanks 180A and 180B.

### (7) Second Water Supply Main

The second water supply main 91 is the same as the second water supply main 91 pertaining to the first embodiment.

### (8) Water Supply Branched Pipes

The water supply branched pipes 95a, 95b, ..., 95z are the same as the water supply branched pipes 95a, 95b, ..., 95z pertaining to the first embodiment.

### (9) Hot Water Supply Main

The hot water supply main 192 is a hot water supply pipe that becomes the backbone for supplying hot water to each of the dwelling units 2a, 2b, ..., 2z of the multi-dwelling housing complex, and is mainly configured by a first hot water supply main 192C, a second hot water supply main 192A and a third hot water supply main 192B. The second hot water supply main 192A extends from the upper portion of the first water supply/hot water supply tank 180A, and a ninth electromagnetic valve 193A is disposed midway thereof. The third hot water supply main 192B extends from the upper portion of the second water supply/hot water supply tank 180B, and a tenth electromagnetic valve 193B is disposed midway thereof. The first hot water supply main 192C runs through the inside of the building frame of the multi-dwelling housing complex as shown in FIG 5 so as to join together the terminal end of the second hot water supply main 192A and the terminal end of the third hot water supply main 192B.

### (10) Hot Water Supply Branched Pipes

The hot water supply branched pipes 194a, 194b, ..., 194z are hot water supply pipes that are branched from the hot water supply main 192 and, as shown in FIG. 1 and FIG. 2, extend to the hot water storage tanks 151a, 151b, ..., 151z of the hot water storage tank units 150a, 150b, ..., 150z disposed in the dwelling units 2a, 2b, ..., 2z of the multi-dwelling housing complex. Additionally, temperature sensors 98a, 98b, ..., 98z and flowmeters 99a, 99b, ..., 99z are attached to these hot water supply branched pipes 194a, 194b, ..., 194z. It will be noted that these temperature sensors 98a, 98b, ..., 98z and flowmeters 99a, 99b, ..., 99z are communicably connected to the central management unit 101 such that how much hot water of what °C the residents of each of the dwelling units 2a, 2b, ..., 2z have used can be understood. Further, eleventh electromagnetic valves 196a, 196b, ..., 196z are disposed respectively in these hot water supply branched pipes 194a, 194b, ..., 194z.

### (11) Terminal Hot Water Supply Pipes

The terminal hot water supply pipes 294a, 294b, ..., 294z are pipes that extend to rooms of the dwelling units 2a, 2b, ..., 2z from the hot water storage tanks 151a, 151b, ..., 151z. Second manual valves 96a, 96b, ..., 96z are disposed on the terminal ends of these terminal hot water supply pipes 294a, 294b, ..., 2946z. It will be noted that these second manual valves 96a, 96b, ..., 96z are opened and closed in response to the will of the residents of the dwelling units 2a, 2b, ..., 2z.

### (12) Individual Management Units

The individual management units have the same structure as that of the individual management units 28a pertaining to the first embodiment, but their functions are in part different. Here, reference will be made to the points of difference with the individual management units 28a pertaining to the first embodiment. The specific point of difference is that the management target changes from floor heating to hot water storage.

Specifically, first, in the first embodiment, the floor heating ON/OFF button and the temperature adjustment button were disposed in the first input component 286a, but in the present embodiment, a hot water storage ON/OFF button, a hot water temperature adjustment button, and a hot water storage volume adjustment button are disposed on the first input component.

Further, in the first embodiment, the start/stop status of floor heating, the set temperature and the operating area were displayed on the first display component 287a, but in the present embodiment, whether or not heating operation is being performed, whether or not hot water is being supplied from the water supply/hot water supply tanks 180A and 180B, the actual temperature of the hot water inside the hot water storage tank 151a (measured by the temperature sensor inside the hot water storage tank 151a) and the set temperature, the remaining volume of storage hot water inside the hot water storage tank 151 a (measured by a water level measuring instrument) and the set hot water volume are displayed on the first display component.

### (13) Central Management Unit

The central management unit 301 is installed in a management room, a machine room, or the like of the multi-dwelling housing complex.

This central management unit 301 is for centrally managing the heat source units 10a, 10b, ..., 10z installed in the dwelling units 2a, 2b, ..., 2z and, as shown in FIG. 7, is mainly configured by a second control component 302, a fee deriving component 303, a second storage component 304 and a second communication component 305.

The second control component 302 is electrically connected to the fourth water pump 81A, the fifth water pump 81B, the fifth electromagnetic valve 212A, the sixth electromagnetic valve 212B, the seventh electromagnetic valve 211A, the eighth electromagnetic valve 211B, the ninth electromagnetic valve 193A, the tenth electromagnetic valve 193B and the eleventh electromagnetic valves 196a, 196b, ..., 196z via a dedicated interface (not shown). The second control component 203 controls, in accordance with a central control program stored in the second storage unit 304, the pump performance of the fourth water pump 81A and the fifth water pump 81B, controls the opening and closing of the fifth electromagnetic valve 212A, the sixth electromagnetic valve 212B, the seventh electromagnetic valve 211 A, the eighth electromagnetic valve 211 B, the ninth electromagnetic valve 193A, the tenth electromagnetic valve 193B and the eleventh electromagnetic valves 196a, 196b, ..., 196z, generates control signals for centrally controlling the plural heat source units 10a, 10b, ..., 10z, and transmits the control signals to the first communication components 285a, 285b, ..., 285z of the individual management units through the second communication component 305.

The fee deriving component 303 is communicably connected to the temperature sensors 98a, 98b, ..., 98z and the flowmeters 99a, 99b, ..., 99z via a dedicated interface (not shown) and derives hot water supply fees in regard to each of the dwelling units 2a, 2b, ..., 2z in accordance with a fee derivation program stored in the second storage component 304. Examples of methods of deriving the hot water supply fees include a method of deriving the hot water supply fees by checking temperature data and use flow rate data against a fee management table, for example. Further, this fee deriving component 303 calculates the contribution percentage of each of the heat source units 10a, 10b, ..., 10z to heating the water or warm water stored in the first water supply/hot water supply tank 180A or the second water supply/hot water supply tank 180B by utilizing the energy measurement data transmitted from the first communication components 285a to determine reduced fees. Examples of methods of calculating these reduced fees include a method of multiplying the electrical power unit price by the sum of the energy measurement data and then multiplying the contribution percentage of each of the heat source unites 10a, 10b, ..., 10z.

In the second storage component 304 are stored programs such as the aforementioned central control program and fee derivation program, history data such as hot water temperature data, use flow rate data and energy measurement data, and a fee management table.

The second communication component 305 is communicable with the first communication components 285a, 285b, ..., 285c of the plural individual management units 28a, transmits control signals and the like generated by the second control component 302 to the individual management units 28a, and receives status data and energy measurement data of the heat source units 10a, 10b, ..., 10z transmitted from the first communication components 285a, 285b, ..., 285z of the individual management units 28a.

### <Functions of Hot Water Supply System>

### (1) Individual Hot Water Storage Function

Here, the individual hot water storage function in the dwelling unit 2a will be representatively described.

In dwelling unit 2a, when the hot water storage ON/OFF button is switched ON with the first input component 286a of the individual management unit 28a and the output value from the temperature sensor disposed inside the hot water storage tank 151 a is lower than a lower limit value, then the first control component 281 a closes the first electromagnetic valve 17a of the flow path switching unit 19a, opens the second electromagnetic valve 18a, and, at the same time, transmits an operation start command to the compressor 11a. Further, at this time, the electrically powered expansion valve 14a is set to an appropriate opening and, at the same time, the third water pump 16a starts operation. It will be noted that, at this time, the first close valve 26a and the second close valve 27a are opened.

Then, when the compressor 11 a starts operation, gas refrigerant is sucked into and compressed by the compressor 11 a, thereafter reaches a supercritical state, is sent to the second refrigerant pipe of the first water heat exchanger 15a via the first electromagnetic valve 17a, exchanges heat with water or warm water flowing through the first water jacket of the first water heat exchanger 15a, and is cooled. In other words, at this time, the water or warm water flowing through the second refrigerant pipe is heated and becomes higher-temperature warm water. It will be noted that this high-temperature warm water is sent to the hot water storage tank 151a of the hot water storage tank unit 150a by the third water pump 16a. Then, when the high-temperature warm water sent to the hot water storage tank 151a has not reached a set hot water temperature, then that warm water is further sent to the first water heat exchanger 15a by the third water pump 16a. Conversely, when the high-temperature warm water that has been sent to the hot water storage tank 151a has reached the set hot water temperature, then the compressor 11a and the third water pump 16a are caused to stop.

Then, the supercritical refrigerant that has been cooled is sent to the electrically powered expansion valve 14a, depressurized, thereafter supplied to the air heat exchanger 13a, and exchanges heat with air blown from the fan 30a, whereby it is evaporated and becomes gas refrigerant.

Then, that gas refrigerant is again sucked into the compressor 11 a via the accumulator 12a. In this manner, individual hot water storage operation is performed (refer to the arrows in FIG. 6).

### (2) Function of Heating Water inside Water Supply/Hot Water Supply Tanks

Unillustrated temperature sensors are disposed in the first water supply/hot water supply tank 180A and the second water supply/hot water supply tank 180B, and these temperature sensors are communicably connected to the central management unit 301. Additionally, when the output values of these temperature sensors fall below a lower limit value, then the second control component 302 causes the fourth water pump 81A or the fifth water pump 8 1 B to operate, at the same time requests start/stop data of the compressor 11a with respect to the individual management units 28a, identifies the heat source units 10a, 10b, ..., 10z that are not performing individual hot water storage operation at that point in time on the basis of that start/stop data, and transmits control signals to the first communication components 285a, 285b, ..., 285z of the individual management units 28a through the second communication component 305.

When the first communication components 285a, 285b, ..., 285z receive the control signals from the second communication component 305, the first control components 281a, 285b, ..., 285z open the first electromagnetic valves 17a of the flow path switching units 19a, close the second electromagnetic valves 18a, and, at the same time, transmit an operation start command to the compressors 11a. Further, at this time, the electrically powered expansion valves 14a are set to an appropriate opening. It will be noted that, at this time, the first close valves 26a and the second close valves 27a are opened.

Then, when the compressors 11 a start operation, gas refrigerant is sucked into and compressed by the compressors 11 a, thereafter reaches a supercritical state, is sent to the fifth refrigerant pipes of the second water heat exchangers 71 a, 71b, ..., 7 1 z via the second electromagnetic valves 18a, the first close valves 26a and the first communication-use refrigerant pipes 61 a, 61b, ..., 6 1 z, exchanges heat with water or warm water flowing through the second water jackets of the second water heat exchangers 71 a, 71b, ..., 71z, and is cooled. In other words, at this time, the water or warm water flowing through the fifth refrigerant pipes is heated and becomes high-temperature warm water. It will be noted that this high-temperature warm water (hot water) is sent to the first water supply/hot water supply tank 180A or the second water supply/hot water supply 180B by the fourth water pump 81 A or the fifth water pump 81 B. Then, when the high-temperature warm water (hot water) that has been sent to the first water supply/hot water supply tank 180A or the second water supply/hot water supply tank 180B has not reached a set hot water temperature, then that warm water (hot water) is further sent to the second water heat exchangers 71 a, 71b, ..., 71z by the fourth water pump 81A or the fifth water pump 81B. Conversely, when the high-temperature warm water (hot water) that has been sent to the first water supply/hot water supply tank 180A or the second water supply/hot water supply tank 180B has reached the set hot water temperature, then the compressors 11a and the fourth water pump 81A or the fifth water pump 81 B are caused to stop.

Then, the supercritical refrigerant that has been cooled is sent to the electrically powered expansion valves 14a via the second communication-use refrigerant pipes 62a, 62b, ..., 62z and the second close valves 27a, depressurized, thereafter supplied to the air heat exchangers 13a, and exchanges heat with air blown from the fans 30a, whereby it is evaporated and becomes gas refrigerant.

Then, that gas refrigerant is again sucked into the compressors 11 a via the accumulators 12a. In this manner, operation of heating the water inside the water supply/hot water supply tanks is performed (refer to the arrows in FIG. 6).

It will be noted that, during this operation of heating the water inside the water supply/hot water supply tanks, when the output values of the temperature sensors disposed inside the hot water storage tanks 151a reach the lower limit value during central control, then individual hot water storage operation is given priority.

### (3) Automatic Water Storage/Hot Water Storage Mechanism

Water level measuring instruments are disposed in the tanks 151a, 151b, ..., 151z, 180A, and 180B pertaining to the present embodiment, and these water level measuring instruments are electrically connected to the second control component 302. Additionally, when the output values of the water level measuring instruments fall below a lower limit value, then the second control component 302 appropriately opens the electromagnetic valves 193A, 183B, 196a, 196b, 212A and 212B and supplies water or warm water (hot water) to the insides of the tanks 151a, 151b, ..., 151z, 180A and 180B. Additionally, when the output values of the water level measuring instruments reach an upper limit value, then the second control component 302 closes the electromagnetic valves 193A, 193B, 196a, 196b, 212A and 212B.

It will be noted that which of the ninth electromagnetic valve 193A and the tenth electromagnetic valve 193B is opened and closed may be determined by an initial setting beforehand or can be appropriately selected in response to the demands of the residents of the dwelling units 2a, 2b, ..., 2z. In the latter case, it is necessary to dispose a selection button on the first input components 286a.

### <Characteristics of Hot Water Supply System>

### (1)

In the hot water supply system 201 pertaining to the present embodiment, the first water supply/hot water supply tank 180A and the second water supply/hot water supply tank 180B are disposed, and warm water (hot water) of different temperatures is stored. For this reason, this hot water supply system 201 can accommodate the various needs of the residents of the dwelling units 2a, 2b, ..., 2z of the multi-dwelling housing complex.

### (2)

In the hot water supply system 201 pertaining to the present embodiment, the first water supply/hot water supply tank 180A and the second water supply/hot water supply tank 180B are interconnected by the first compensation-use communicating pipe 210A and the second compensation-use communicating pipe 210B, and exchange of warm water (hot water) can be performed by controlling the seventh electromagnetic valve 211A and the eighth electromagnetic valve 211B. For this reason, in this hot water supply system 201, even when the first water supply/hot water supply tank 180A or the second water supply/hot water supply tank 180B is centrally used, the warm water (hot water) of the second water supply/hot water supply tank 180B or the first water supply/hot water supply tank 180A can be immediately compensated.

### (3)

In the hot water supply system 201 pertaining to the present embodiment, the compact hot water storage tanks 151 a are disposed in the dwelling units 2a, 2b, ..., 2z. For this reason, in this hot water supply system 201, it becomes possible to store relatively low-temperature warm water in the first water supply/hot water supply tank 180A and the second water supply/hot water supply tank 180B, to further warm that warm water in the first water heat exchangers 15a after that warm water has been supplied to the hot water storage tanks 151a of the dwelling units 2a, 2b, ..., 2z, and to generate higher-temperature warm water.

### <Modifications>

### (A)

In the hot water supply system 201 pertaining to the preceding embodiment, the floor heating units 50a, 50b, ..., 50z may also be connected to the first water heat exchangers 15a (multi-connection).

### (B)

In the hot water supply system 201 pertaining to the preceding embodiment, the first water supply/hot water supply tank 180A and the second water supply/hot water supply tank 180B were interconnected by the first compensation-use communicating pipe 210A and the second compensation-use communicating pipe 210B, and warm water (hot water) of respectively different temperatures was stored in the first water supply/hot water supply tank 180A and the second water supply/hot water supply tank 180B, but the first water supply/hot water supply tank 180A and the second water supply/hot water supply tank 180B may also be interconnected by one compensation-use communicating pipe and warm water (hot water) of the same temperature may be stored in the first water supply/hot water supply tank 180A and the second water supply/hot water supply tank 180B.

### <Industrial Applicability>

The hot water supply system pertaining to the present invention has the characteristic that a repair reserve fund corresponding to a heat source machine becomes unnecessary and the economical burden on residents of a condominium multi-dwelling housing complex becomes lighter, and the hot water supply system is useful as a hot water supply system for a multi-dwelling housing complex.

## Claims

1. A hot water supply system (1) comprising:
a plurality of heat source units (10a, 10b, ..., 10z) including refrigerant circuits (20a, 20b, ..., 20z) that are formed by sequentially connecting compressors (11a, 11b, ... , 11z), first radiators (15a, 15b, ..., 15z), pressure reducing mechanisms (14a, 14b, ..., 14z) and evaporators (13a, 13b, ..., 13z);
first fluid pipes (24a, 25a, 24b, 25b, ..., 24z, 25z) that are disposed with respect to the first radiators and through which flows a fluid that exchanges heat in the first radiators with refrigerant supplied from the compressors;
second radiators (71a, 71b, ..., 71z) that are connected in parallel with respect to the first radiators to discharge sides of the compressors;
a second fluid pipe (72) through which flows a liquid fluid that exchanges heat in the second radiators with the refrigerant supplied from the compressors; and
a first liquid fluid storage container (80, 180A, 180B) that is connected to the second fluid pipe and is for storing the liquid fluid.

2. The hot water supply system of claim 1, further comprising a central control device (102) that centrally controls the plurality of heat source units.

3. The hot water supply system of claim 1 or 2, further comprising flow rate control mechanisms (19a, 19b, ..., 19z) that control the flow rate of the refrigerant supplied from the compressors to the first radiators and the flow rate of the refrigerant supplied from the compressors to the second radiators.

4. The hot water supply system of any of claims 1 to 3, further comprising heat exchangers (51, 51b, ..., 51z) that are connected to the first fluid pipes.

5. The hot water supply system of any of claims 1 to 4, wherein the first liquid fluid storage container (80) is one.

6. The hot water supply system of claim 5, wherein one of the second fluid pipe is disposed with respect to a plurality of the second radiators.

7. The hot water supply system of claim 5 or 6, further comprising a plurality of liquid fluid delivery pipes (94a, 94b, ..., 94z) that extend from the first liquid fluid storage container.

8. The hot water supply system of any of claims 1 to 4, wherein a plurality of the first liquid fluid storage containers (180A, 180B) are disposed, and the first liquid fluid storage containers are interconnected by communicating pipes (210A, 210B) such that the first liquid fluid storage containers are capable of exchanging the liquid fluid.

9. The hot water supply system of claim 8, further comprising a plurality of liquid fluid delivery pipes (94a, 94b, ..., 94z) that extend from the first liquid fluid storage containers.

10. The hot water supply system of claim 7 or 9, further comprising second liquid fluid storage containers (151a) that are disposed in the vicinities of the heat source units and are for storing the liquid fluid delivered from the first liquid fluid storage containers via the liquid fluid delivery pipes.

11. The hot water supply system of any of claims 7, 9 and 10, further comprising
flow rate measuring means (99a, 99b, ..., 99z) that measure the flow rate of the liquid fluid flowing in the liquid fluid delivery pipes and
temperature measuring means (98a, 98b, ..., 98z) that measure the temperature of the liquid fluid flowing in the liquid fluid delivery pipes.

12. The hot water supply system of any of claims 1 to 11, further comprising energy measuring means (282a, 282b, ..., 282z) that measure the amount of consumed energy of the heat source units for supplying the refrigerant to the second radiators.
